# EUROPÄISCHE PATENTSCHRIFT

(11) **EP 1 728 661 B1**
(45) Veröffentlichungstag und Bekanntmachung des Hinweises auf die Patenterteilung: **08.07.2009**
(21) Anmeldenummer: 06007720.3
(22) Anmeldetag: 12.04.2006
(51) Int. Cl.: B60H 1/22

(54) **Fahrzeugtemperiersystem**
Air conditioning system for a vehicle
Système de climatisation pour véhicule

(30) Priorität: 03.06.2005 DE 102005025642
(43) Veröffentlichungstag der Anmeldung: 06.12.2006
(73) Patentinhaber: J. Eberspächer GmbH & Co. KG, 73730 Esslingen (DE)
(72) Erfinder: Haefner, Michael, 70469 Stuttgart (DE); Collmer, Andreas, 73773 Aichwald (DE); Schlecht, Patric, 73760 Ostfildern (DE)
(74) Vertreter: Ruttensperger, Bernhard

(56) Entgegenhaltungen:
- DE-A1- 2 432 850
- DE-U1- 8 127 115
- US-A- 3 989 030

## Beschreibung

Die vorliegende Erfindung betrifft ein Fahrzeugtemperiersystem gemäß dem Oberbegriff des Anspruchs1.

Ein beispielsweise aus der DE 102 11 591 A1 bekanntes Fahrzeugtemperiersystem ist in Fig. 2 dargestellt. Man erkennt bei dem Fahrzeugtemperiersystem 10 ein beispielsweise aus Kunststoff oder Blechmaterial hergestelltes Gehäuse 12, das eine sehr große Lufteintrittsöffnung 14 bereitstellt. Die beispielsweise durch ein nicht dargestelltes Gebläse geförderte Luft tritt in einer Lufteinströmrichtung L_{E} in diese Öffnung 14 und umströmt dann den Wärmetauscherbereich 16 eines allgemein mit 18 bezeichneten brennstoffbetriebenen Heizgerätes. Dieses brennstoffbetriebene Heizgerät 18 umfasst neben dem Wärmetauscherbereich 16 noch einen im Wesentlichen außerhalb des Gehäuses 12 angeordneten Brennerbereich 20. Diesem Brennerbereich 20 werden Verbrennungsluft und Brennstoff zugeführt. Die in einer Brennkammer bei der ablaufenden Verbrennung entstehenden Verbrennungsabgase strömen entlang eines quer zur Lufteinströmrichtung L_{E} orientierten Wärmetauscherkörpers 22 und übertragen dabei Wärme auf diesen und die an seinem Außenumfang vorgesehenen Wärmeübertragungsrippen 24. Diese liegen näherungsweise parallel zur Lufteinströmrichtung L_{E} und werden somit von der einströmenden Luft umströmt. Diese nimmt dabei Wärme von den Wärmeübertragungsrippen 24 auf und gelangt nach weiterer Durchströmung des Gehäuses 12 als in einer Luftausströmrichtung L_{A} ausströmende Luft beispielsweise in den Fahrzeuginnenraum.

Es ist selbstverständlich, dass das Fahrzeugtemperiersystem 10 neben dem brennstoffbetriebenen Heizgerät 18 auch weitere Systembereiche zur Konditionierung der in den Fahrzeuginnenraum einzuleitenden Luft aufweisen kann. So kann in dem Gehäuse 12 neben dem bereits angesprochenen Luftfördergebläse auch ein Verdampfer einer Klimatisieranordnung vorgesehen sein, ebenso wie ein Wärmetauscher eines Fahrzeugkühlmittelkreislaufs.

Ein Problem bei einem derartigen Temperiersystem ist, dass zum Betrieb des brennstoffbetriebenen Heizgerätes diesem, wie bereits erwähnt, der im Allgemeinen flüssige Brennstoff und die Verbrennungsluft zugeführt werden müssen und gleichermaßen die Verbrennungsabgase abgeführt werden müssen, ohne dabei den Luftstrom der eintretenden Luft zu behindern bzw. ohne die Gefahr einer Durchmischung verschiedener Strömungen zu erzeugen. Aus diesem Grund ist bei dem aus der DE 102 11 591 A1 bekannten Fahrzeugtemperiersystem 10 der Brennerbereich 20 des brennstoffbetriebenen Heizgeräts 18 an der Außenseite des Gehäuses 12 angeordnet.

Ein Fahrzeugtemperiersystem gemäß dem Oberbegriff des Anspruchs 1 ist aus der DE 24 32 850 A1 bekannt. Das dort offenbarte Temperiersystem weist einen in einem Gehäuse gebildeten Aufnahmeraum auf, in welchem ein Brenneraggregat untergebracht ist. Um Brennstoff und Verbrennungsluft zuzuführen, sind in dem Brenneraggregat zwei Leitungen vorgesehen, die einen Schlitz in dem das Brenneraggregat enthaltenden Gehäuse durchsetzen. Dieser Schlitz ist durch eine Gummidichtung abgeschlossen, die zwei Öffnungen für die Leitungen aufweist und an diesen Öffnungen abdichtend am Außenumfang der Leitungen anliegt. Ferner ist die Dichtung so geformt, dass sie auch dort an einem Fahrzeugbauteil anliegt, wo die Leitungen jeweils für sie vorgesehene Öffnungen des Fahrzeugbauteils durchsetzen. Die Gummidichtung ist im Wesentlichen plattenartig ausgebildet.

Es ist die Aufgabe der vorliegenden Erfindung, ein derartiges gattungsgemäßes Fahrzeugtemperiersystem so weiterzubilden, dass es bei großer Einsatzvariabilität die Möglichkeit einer leichten Montage gewährleistet.

Erfindungsgemäß wird diese Aufgabe gelöst durch ein Fahrzeugtemperiersystem gemäß Anspruch 1. Ein derartiges Fahrzeugtemperiersystem umfasst unter anderem in einem an einem Fahrzeug festzulegenden oder festgelegten Gehäuse ein brennstoffbetriebenes Heizgerät mit einem Brennerbereich und einem Wärmetauscherbereich zur Übertragung von im Brennerbereich bereitgestellter Wärme auf das Gehäuse durchströmende Luft, wobei in dem Gehäuse wenigstens eine Durchführöffnung vorgesehen ist für wenigstens eine zu/von dem Heizgerät führende Leitung, welches System weiter gekennzeichnet ist durch ein die wenigstens eine Durchführöffnung im Wesentlichen dicht abschließendes, flexibles Dichtungselement.

Durch das Bereitstellen einer flexiblen Abdichtung des Gehäuses in demjenigen Bereich, in welchem es verschiedene Leitungsdurchführungen aufweist, wird für einen hermetischen Abschluss des Gehäuses gesorgt. Die Gefahr, dass Nebenluftströmungen oder Druckverluste entstehen und die Gefahr, dass bereits nach außen abgeführte Verbrennungsabgase wieder in den Innenraum des Gehäuses oder in den Innenraum des Fahrzeugs gezogen werden, können somit praktisch ausgeschlossen werden.

Erfindungsgemäß wird der vorangehend angesprochene dichte Abschluss in sehr einfacher und zuverlässiger Art und Weise dadurch erlangt dass das Dichtungselement einen ersten Abdichtbereich umfasst, mit welchem es in Abdichtkontakt mit dem Gehäuse steht, und wenigstens einen zweiten Abdichtbereich umfasst, mit welchem es in Abdichtkontakt mit der wenigstens einen Leitung steht.

Dabei kann vor allem der dichte Abschluss bezüglich des Gehäuses einfach dadurch erlangt werden, dass das Dichtungselement mit seinem ersten Abdichtbereich gegen eine wenigstens eine Durchführöffnung umgebende Oberfläche des Gehäuses gepresst ist, wobei vorzugsweise vorgesehen sein kann, dass ein die wenigstens eine Durchführöffnung im Wesentlichen vollständig umgebendes erstes Anpresselement vorgesehen ist und dass das Dichtungselement mit seinem ersten Abdichtbereich zwischen der Oberfläche des Gehäuses und dem ersten Anpresselement eingespannt ist. Vor allem durch das feste Einspannen des Dichtungselements in seinem ersten Abdichtbereich zwischen dem Gehäuse und dem ersten Anpresselement ist ein unbeabsichtigtes und zu Undichtigkeiten führendes Ablösen des Dichtungselements vom Gehäuse praktisch nicht möglich.

Weiter kann vorgesehen sein, dass das Dichtungselement mit seinem wenigstens einen zweiten Abdichtbereich gegen eine Außenumfangsfläche der wenigstens einen Leitung gepresst ist. Hier wird ein dichter Abschluss dadurch in einfacher Art und Weise unterstützt, dass der wenigstens eine zweite Abdichtbereich eine Öffnung aufweist, deren Öffnungsabmessung kleiner ist, als die Querschnittsabmessung der wenigstens einen Leitung.

Das Dichtungselement umfasst erfindungsgemäß einen dritten Abdichtbereich zur abdichtenden Anlage an einem Fahrzeugbauteil.

Auch hier kann eine stabile und dichte Anlage des Dichtungselements dadurch unterstützt werden, dass der dritte Abdichtbereich zum Einspannen zwischen dem Fahrzeugbauteil und einem zweiten Anpresselement ausgebildet ist. Vorzugsweise ist dabei vorgesehen, dass das Dichtungselement mit seinem dritten Abdichtbereich und das zweite Anpresselement so geformt sind, dass sie eine in dem Fahrzeugteil vorgesehene Öffnung im Wesentlichen vollständig umgeben.

Da das erfindungsgemäße Temperiersystem in verschiedene Fahrzeugtypen eingegliedert werden soll, wird die Flexibilität beim Eingliedern und vor allem auch die Flexibilität beim Ausgleichen von Fertigungstoleranzen dadurch verbessert, dass erfindungsgemäß das Dichtungselement zwischen seinem dritten Abdichtbereich und seinem ersten Abdichtbereich wenigstens bereichsweise balgenartig ausgebildet ist.

Das Dichtungselement besteht erfindungsgemäß aus einem im Wesentlichen topfartig geformten Teil, so dass das Zusammenfügen mehrerer Teile mit dem Risiko, dass nachfolgend wieder Undichtigkeiten entstehen, vermieden werden kann.

Weiter wird vorgeschlagen, dass das Dichtungselement aus gummielastischem Material aufgebaut ist. Gummielastisch bedeutet hier, dass das Dichtungselement nicht nur flexibel und elastisch verformbar ist, sondern auch eine gewisse Rückstellkraft in eine Ausgangsform bereitstellt, was beispielsweise im Bereich des wenigstens einen zweiten Abdichtbereichs von besonderem Vorteil zur Erlangung einer dichten Anlage an der Außenumfangsfläche einer Leitung ist.

Weiter kann bei dem erfindungsgemäßen System vorgesehen sein, dass die Durchführöffnung von einer Brennstoffzuführleitung oder/und einer Verbrennungsluftzuführleitung oder/und einer Abgasabführleitung durchsetzt ist.

Die vorliegende Erfindung wird nachfolgend mit Bezug auf die beiliegenden Zeichnungen detailliert beschrieben. Es zeigt:
- Fig. 1: eine vergrößerte Detailansicht eines erfindungsgemäßen Temperier-systems mit einem einen dichten Abschluss bereitstellenden Dichtungselement;
- Fig. 2: eine perspektivische Ansicht eines aus dem Stand der Technik bekannten Fahrzeugtemperiersystems.

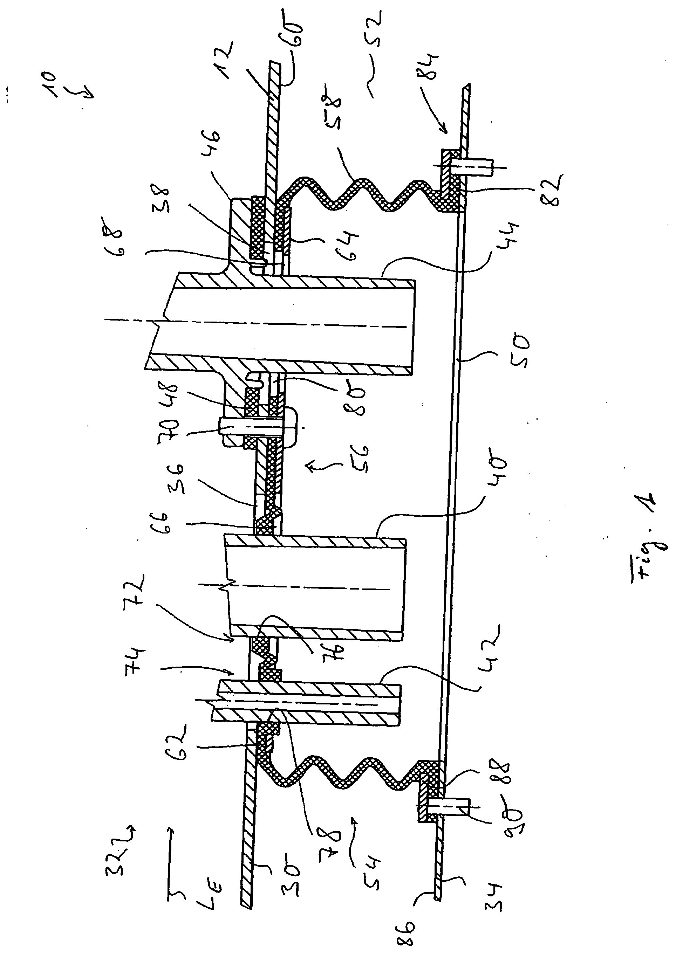

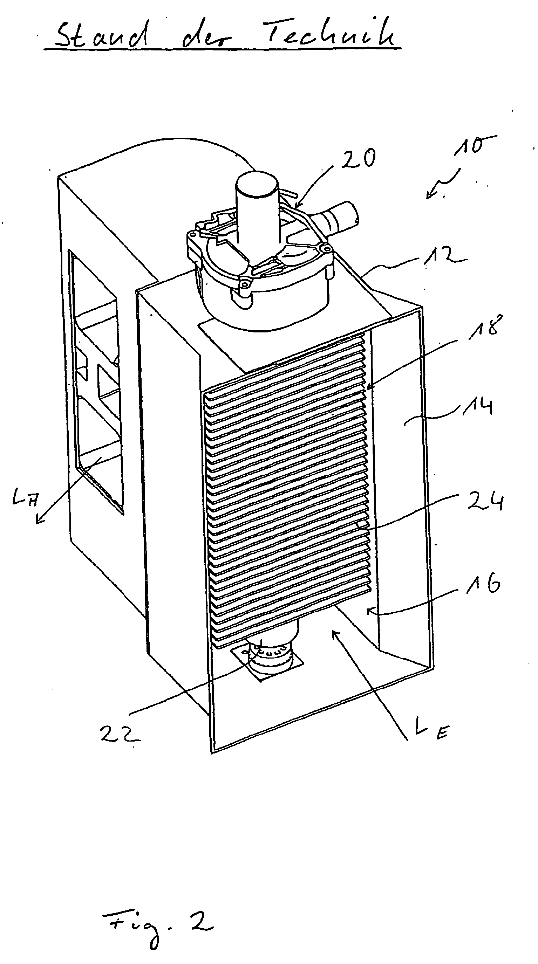

Bevor mit Bezugnahme auf die Fig. 1 die Erfindungsaspekte detailliert beschrieben werden, sei darauf hingewiesen, dass ein Fahrzeugtemperiersystem, bei dem die vorliegende Erfindung zur Anwendung kommen kann, grundsätzlich so aufgebaut sein kann, wie vorangehend mit Bezug auf die DE 102 11 591 A1 und die Fig. 2 beschrieben. Auf diese Druckschrift wird vor allem hinsichtlich des konstruktiven Aufbaus eines Fahrzeugtemperiersystems an sich hiermit ausdrücklich Bezug genommen.

In Fig. 1 erkennt man den in der Darstellung der Fig. 2 beispielsweise oben liegenden Bereich des Gehäuses 12, also beispielsweise einen Abschnitt einer Gehäuseseitenwand 30. In der Darstellung der Fig. 1 über dieser Seitenwand 30 ist der Innenraum 32 des Gehäuses 12, der beispielsweise in der Richtung L_{E} von der zu konditionierenden Luft durchströmt wird. In der Fig. 1 liegt unter der Gehäuseseitenwand 30 ein Fahrzeugbauteil 34, beispielsweise bereitgestellt durch ein Bodenblech des Fahrzeugs.

Man erkennt in der Gehäuseseitenwand 30 zwei Durchführöffnungen 36, 38 in seitlichem Abstand. Diese beiden Öffnungen 36, 38 können beispielsweise mit kreisrunder Formgebung oder im Falle der Durchführöffnung 36 mit langgestreckter Form ausgebildet sein. Durch die Durchführöffnung 36 hindurch ist ein eine Verbrennungsluftleitung bereitstellender Verbrennungsluftansaugstutzen 40 geführt, ebenso wie eine Brennstoffleitung 42. Über den Verbrennungsluftansaugstutzen 40 gelangt die mit dem zugeführten Brennstoff zu verbrennende Luft in den Bereich des hier beispielsweise dann innerhalb des Gehäuses 12 positionierten Brennerbereichs 20 des brennstoffbetriebenen Heizgerätes 18. An die beispielsweise ebenfalls als Stutzen ausgebildete Brennstoffzuführleitung 42 kann dann beispielsweise ein von einem Brennstoffreservoir herführender Kunststoffschlauch angeschlossen werden.

Ein eine Abgasabführleitung bereitstellender Abgasstutzen 44 durchsetzt die Durchführöffnung 38. Dieser Abgasstutzen 44 weist in seinem an der Innenseite des Gehäuses 12 liegenden Bereich einen flanschartigen Rand 46 auf, mit welchem er unter Zwischenlagerung eines Isolationselements 48 an der Innenseite des Gehäuses 12 anliegt. Da in diesem Abgasstutzen 44 die sehr heißen Verbrennungsabgase geführt werden, sorgt das Isolationselement 48 für eine thermische Entkopplung bezüglich des Gehäuses 12, so dass dieses durch die vergleichsweise hohen Temperaturen nicht beschädigt werden kann, vor allem wenn es aus Kunststoff aufgebaut ist. Wie bereits mit Bezug auf den Stutzen 42 ausgeführt, können auf alle Stutzen 40, 42 und 44 zur Führung der jeweiligen Medien zu bzw. von dem Temperiersystem 10 Anschlussleitungen aufgeschoben und dort mit Rohrschellen o.dgl. festgelegt werden.

Im zusammengefügten Zustand eines derartigen Fahrzeugtemperiersystems 10 bzw. nach Eingliederung in ein Fahrzeug liegt demjenigen Bereich des Gehäuses 12, in welchem die Durchführöffnungen 36, 38 vorgesehen sind, in dem Fahrzeugbauteil 34, also beispielsweise dem Bodenblech, eine Öffnung 50 gegenüber. Diese ist beispielsweise so bemessen, dass sie den gesamten Bereich der Durchführöffnungen 36, 38 am Gehäuse 12 freilässt. Die beiden Stutzen 40, 44 sind so bemessen, dass sie nicht über den zwischen dem Gehäuse 12 und dem Fahrzeugbauteil 34 und innerhalb des Fahrzeugs liegenden Raumbereich 52 und somit auch nicht über das Fahrzeugbauteil 34 hinausragen. Sie enden also innerhalb dieses Raumbereichs 52. Auch die beispielsweise als Stutzen ausgebildete Brennstoffzuführleitung 42 kann in diesem Raumbereich 52 enden. Eine Brennstoffversorgungsleitung kann dann durch die Öffnung 50 hindurch zu einem Brennstofftank geführt werden.

Um die Durchführöffnungen 36, 38 und auch die Öffnung 50 in geeigneter Weise dicht abzuschließen ist ein allgemein mit 54 bezeichnetes Dichtungselement vorgesehen. Dieses ist beispielsweise aus Gummi oder gummielastischem Material aufgebaut, ist also flexibel und mit einer bestimmten Rückstellkraftcharakteristik elastisch verformbar. Man erkennt, dass das Dichtungselement 54 im Wesentlichen topfartig ausgestaltet ist mit einer Bodenwandung 56 und einer Umfangswandung 58. Im Bereich der Bodenwandung 56 bildet das einteilig ausgestaltete Dichtungselement 54 einen an der Außenoberfläche 60 des Gehäuses 12 anliegenden ersten Abdichtbereich 62. Dieser erste Abdichtbereich 62 umfasst also im Wesentlichen denjenigen Bereich der Bodenwandung 56, der die Durchführöffnungen 36, 38 umgebend in Kontakt mit der Außenoberfläche 60 des Gehäuses 12 tritt oder treten kann. In diesem ersten Abdichtbereich stellt das Dichtungselement 54 einen dichten Abschluss bezüglich der Gehäuseseitenwand 30 her. Dazu kann an der vom Gehäuse 12 abgewandten Rückseite der Bodenwandung 56 des Dichtungselements 54 ein plattenartiges Anpresselement 64 angeordnet werden. Dieses beispielsweise aus Blech aufgebaute Anpresselement 64 ist so gestaltet, dass es in Entsprechung zu den Durchführöffnungen 36, 38 Öffnungen 66, 68 aufweist, durch welche die Leitungen bzw. Stutzen 42, 40 und 44 hindurchgreifen können. Dabei sind die Öffnungen 66, 68 in ihrer Abmessung im Wesentlichen auf die Durchführöffnungen 36, 38 abgestimmt. Das Anpresselement 64 ist durch mehrere Schraubbolzen 70 bezüglich des Gehäuses 12 festgelegt, wobei, wie in der Fig. 1 erkennbar, diese Schraubbolzen 70 gleichzeitig beispielsweise auch zum Teil dazu dienen, den Stutzen 44 mit seinem flanschartigen Rand 46 unter Zwischenlage des Isolationselements 48 fest am Gehäuse 12 zu verankern.

Durch das Festlegen des Anpresselements 64 am bzw. bezüglich des Gehäuses 12 wird also das Dichtungselement 54 in seinem ersten Abdichtbereich 62 fest gegen die Außenoberfläche des Gehäuses 60 gepresst, und zwar in seinem gesamten auch die Durchführöffnungen 36, 38 umgebenden Bereich.

In der Bodenwandung 56 ist in Zuordnung zu den beiden Leitungen bzw. Stutzen 40, 42 jeweils ein zweiter Abdichtbereich 72, 74 vorgesehen. Jeder dieser Abdichtbereiche 72, 74 umfasst in dem Dichtungselement 54 eine Öffnung 76 bzw. 78, durch die der jeweilige Stutzen 40 bzw. 42 hindurchgeführt ist. Im Bereich dieser Öffnungen 76, 78 bzw. der zweiten Abdichtbereiche 72, 74 liegt das Dichtungselement 54 auf Grund seiner gummielastischen Rückstellcharakteristik unter Vorspannung an den Außenumfangsflächen der Leitungen bzw. Stutzen 40, 42 an. Hierzu ist es vorteilhaft, im unverformten Grundzustand das Dichtungselement 54 so zu gestalten, dass die Querschnittsabmessungen der Öffnungen 76, 78 zumindest geringfügig kleiner sind als die entsprechenden Abmessungen der Leitungen bzw. Stutzen 40, 42. Beim Hindurchführen der Stutzen 40, 42 durch die zugeordneten Öffnungen 76, 78 wird in diesen Bereichen das Dichtungselement 54 dann aufgeweitet, so dass es nachfolgend unter seiner inhärenten Vorspannung gegen die Außenumfangsflächen der Stutzen 40, 42 presst. Selbstverständlich wäre es hier auch möglich, Rohrschellen zum Einsatz zu bringen, durch welche das Dichtungselement 54 in seinen zweiten Abdichtbereichen 72 bzw. 74 fest gegen die Außenumfangsflächen der Stutzen 40, 42 gepresst wird.

Man erkennt in Fig. 1 weiter, dass in Zuordnung zu der Durchführöffnung 38 bzw. dem Abgasstutzen 44 das Dichtungselement 54 ebenfalls eine Öffnung 80 aufweist. Diese ist so bemessen, dass sie größer ist, als die Außenabmessung der Leitung bzw. des Stutzens 44, so dass hier ein Zwischenraum und kein direkter Anlagekontakt geschaffen ist. Auf diese Art und Weise wird sichergestellt, dass der im Verbrennungsbetrieb durch die ihn durchströmenden Verbrennungsabgase stark erwärmte Stutzen 44 diese Wärme nicht direkt auf das Dichtungselement 54 übertragen und dieses somit auch nicht schädigen kann. Der dichte Abschluss des Innenraums 32 des Gehäuses 12 wird hier unter anderem durch das fest zwischen dem flanschartigen Rand 46 des Stutzens 44 und dem Gehäuse 12 eingespannte Isolationselement 48 realisiert.

Das Dichtungselement 54 weist in seinem von der Bodenwandung 56 entfernt liegenden freien Ende der Umfangswandung 58 einen in Form eines nach radial außen greifenden flanschartigen Randes 82 bereitgestellten Abdichtbereich 84 auf. In diesem Bereich bzw. mit diesem Rand 82 ist das Dichtungselement 54 so geformt, dass es die Öffnung 50 im Fahrzeugbauteil 34 vollständig umgibt bzw. an der diese Öffnung umgebenden Oberfläche 86 des Fahrzeugbauteils 34 anliegt. Mit seinem Rand 82, also dem dritten Abdichtbereich 84 ist das Dichtungselement 54 zwischen dem Fahrzeugbauteil 34 und einem weiteren Anpresselement 88 gehalten. Ebenso wie der Rand 82 des Dichtungselements 54 umgibt vorzugsweise das Anpresselement 88 die Öffnung 50 vollständig, so dass durch Festlegen des Anpresselements 88 bezüglich des Fahrzeugbauteils 34 der Rand 82 des Dichtungselements 54 nunmehr abdichtend gegen die Oberfläche 86 gepresst wird und somit den Raumbereich 52 im Anschluss an das Fahrzeugbauteil 34 abdichtend abschließt. Zur Festlegung des Anpresselements 88 können Schraubbolzen oder Nietbolzen 90 eingesetzt werden, die das Fahrzeugbauteil 34 durchsetzen können und ggf. auch integral mit dem Anpresselement 88 ausgebildet sein können.

Da im Fahrbetrieb Vibrationen und Schwingungen auftreten, welche dazu führen, dass das Gehäuse 12 des Temperiersystems 10 sich bezüglich des Fahrzeugbauteils 34 bewegen kann, ist, wie man in Fig. 1 erkennt, das Dichtungselement 54 mit seiner zwischen den beiden Abdichtbereichen 62, 84 liegenden Umfangswandung 58 im Wesentlichen balgenartig ausgebildet. Dies erleichtert nicht nur die Montage, sondern ermöglicht es auch, das Temperiersystem 10 bei verschiedenen Fahrzeugtypen einzusetzen, in welchen verschiedene Relativlagen zwischen dem Gehäuse 12 und dem Fahrzeugbauteil 34 erforderlich sind. Auch Fertigungstoleranzen können auf diese Art und Weise leicht ausgeglichen werden.

Bei einem erfindungsgemäßen Fahrzeugtemperiersystem wird durch Bereitstellen des Dichtungselements in einfacher und zuverlässiger Art und Weise dafür gesorgt, dass verschiedene Strömungen bzw. strömungstechnisch zu führende Medien sich nicht in ungewollter Weise durchmischen können. So besteht nicht die Gefahr, dass die aus dem Stutzen 44 austretenden Verbrennungsabgase in den Innenraum 32 des Gehäuses 12 gelangen können, und auch nicht in den Raumbereich 52 zwischen dem Gehäuse 12 und dem Fahrzeugbauteil 34 bzw. den Fahrgastraum gelangen können. Dies ist insbesondere daher von Bedeutung, da die Verbindungen der Stutzen 40, 42, 44 mit den jeweils die Medien zu- bzw. abführenden Schlauchleitungen somit nicht gasdicht ausgeführt werden müssen. Weiterhin kann bzw. wird somit das Dichtungselement 54 so groß ausgeführt, dass derartige Anschlussverbindungen mit Rohrschellen realisiert werden können. Da weiterhin vorzugsweise alle Stutzen bzw. Leitungen 40, 42, 44 so ausgebildet sind, dass sie das Fahrzeugbauteil 34 nicht durchsetzen, also im Raumbereich 52 enden, besteht nicht die Gefahr, der Beschädigung dieser Bereiche von außen her, und es wird eine leichte Montierbarkeit bzw. Demontierbarkeit gewährleistet. Es ist selbstverständlich, dass das Dichtungselement 54 aus geeignetem Material aufgebaut ist. Dieses Material muss einerseits den auftretenden Temperaturen standhalten können, muss andererseits aber auch beispielsweise gegen die Abgase resistent sein und insbesondere auch in einem vergleichsweise großen Temperaturbereich, in welchem Fahrzeuge eingesetzt werden, seine flexiblen und abdichtenden Eigenschaften beibehalten. Da die Stutzen 40, 42 und 44 oberhalb des Fahrzeugbauteils 34 enden und die darin vorgesehene Öffnung nicht durchdringen, ist eine sehr einfache Montage des Temperiersystems möglich. Es ist keine senkrechte Montage erforderlich. Vielmehr kann das Temperiersystem 10 beispielsweise durch Einschwenken oder in seitlicher Lage montiert werden.

## Patentansprüche

1. Fahrzeugtemperiersystem, umfassend in einem an einem Fahrzeug festzulegenden oder festgelegten Gehäuse (12) ein brennstoffbetriebenes Heizgerät (18) mit einem Brennerbereich (20) und einem Wärmetauscherbereich (16) zur Übertragung von im Brennerbereich (20) bereitgestellter Wärme auf das Gehäuse (12) durchströmende Luft, wobei in dem Gehäuse (12) wenigstens eine Durchführöffnung (36, 38) vorgesehen ist für wenigstens eine zu/von dem Heizgerät führende Leitung (40, 42, 44), ferner umfassend ein die wenigstens eine Durchführöffnung (36, 38) im Wesentlichen dicht abschließendes, flexibles Dichtungselement (54), wobei das Dichtungselement (54) einen ersten Abdichtbereich (62) umfasst, mit welchem es in Abdichtkontakt mit dem Gehäuse (12) steht, und wenigstens einen zweiten Abdichtbereich (72, 74) umfasst, mit welchem es in Abdichtkontakt mit der wenigstens einen Leitung (40, 42) steht, wobei ferner das Dichtungselement (54) einen dritten Abdichtbereich (84) umfasst zur abdichtenden Anlage an einem Fahrzeugbauteil (34) und mit seinem dritten Abdichtbereich (84) eine Öffnung (50) in dem Fahrzeugbauteil vollständig umgibt,
**dadurch gekennzeichnet, dass** das Dichtungselement (54) aus einem im Wesentlichen topfartig geformten Teil besteht und der erste Abdichtbereich (62) und der wenigstens eine zweite Abdichtbereich (72, 74) im Bereich einer Bodenwandung (56) ausgebildet sind, und dass das Dichtungselement (54) im Bereich einer Umfangswandung (58) zwischen seinem dritten Abdichtbereich (84) und seinem ersten Abdichtbereich (62) wenigstens bereichsweise balgenartig ausgebildet ist.

2. Fahrzeugtemperiersystem nach Anspruch 1,
**dadurch gekennzeichnet, dass** das Dichtungselement (54) mit seinem ersten Abdichtbereich (62) gegen eine wenigstens eine Durchführöffnung (36, 38) umgebende Oberfläche (60) des Gehäuses (12) gepresst ist.

3. Fahrzeugtemperiersystem nach Anspruch 2,
**dadurch gekennzeichnet, dass** ein die wenigstens eine Durchführöffnung (36, 38) im Wesentlichen vollständig umgebendes erstes Anpresselement (64) vorgesehen ist und dass das Dichtungselement (54) mit seinem ersten Abdichtbereich (62) zwischen der Oberfläche (60) des Gehäuses (12) und dem ersten Anpresselement (64) eingespannt ist.

4. Fahrzeugtemperiersystem nach einem der Ansprüche 1 bis 3,
**dadurch gekennzeichnet, dass** das Dichtungselement (54) mit seinem wenigstens einem zweiten Abdichtbereich (72, 74) gegen eine Außenumfangsfläche der wenigstens einen Leitung (40, 42) gepresst ist.

5. Fahrzeugtemperiersystem nach Anspruch 4,
**dadurch gekennzeichnet, dass** der wenigstens eine zweite Abdichtbereich (72, 74) eine Öffnung (76, 78) aufweist, deren Öffnungsabmessung kleiner ist, als die Querschnitssabmessung der wenigstens einen Leitung (40, 42).

6. Fahrzeugtemperiersystem nach einem der Ansprüche 1 bis 5,
**dadurch gekennzeichnet, dass** der dritte Abdichtbereich (84) zum Einspannen zwischen dem Fahrzeugbauteil (34) und einem zweiten Anpresselement (88) ausgebildet ist.

7. Fahrzeugtemperiersystem nach Anspruch 6,
**dadurch gekennzeichnet, dass** das Dichtungselement (54) mit seinem dritten Abdichtbereich (84) und das zweite Anpresselement (88) so geformt sind, dass sie eine in dem Fahrzeugteil (34) vorgesehene Öffnung (50) im Wesentlichen vollständig Umgeben können.

8. Fahrzeugtemperiersystem nach einem der Ansprüche 1 bis 7,
**dadurch gekennzeichnet, dass** das Dichtungselement (54) aus gummielastischem Material aufgebaut ist.

9. Fahrzeugtemperiersystem nach einem der Ansprüche 1 bis 8,
**dadurch gekennzeichnet, dass** die Durchführöffnung (36, 38) von einer Brennstoffzuführleitung (42) oder/und einer Verbrennungsluftzuführleitung (40) oder/und einer Abgasabführleitung (44) durchsetzt ist.

## Claims

1. A vehicle temperature control system, comprising in a housing (12) mounted or to be mounted on a vehicle a fuel-powered heating appliance (18) with a burner zone (20) and a heat-exchanger zone (16) for transferring heat made available in the burner zone (20) to air flowing through the housing (12), wherein in the housing (12) at least one passage opening (36,38) is provided for at least one duct (40,42,44) leading to/from the heating appliance, further comprising a flexible sealing element (54) sealing substantially fluidtightly at least one passage opening (36,38), wherein the sealing element (54) comprises a first sealing zone (62) with which it is in sealing contact with the housing (12), and at least one second sealing zone (72,74) with which it is in sealing contact with the at least one duct (40,42), wherein further the sealing element (54) comprises a third sealing zone (84) to be applied against a vehicle component (34) so as to form a seal and with its third sealing zone (84) entirely surrounds an opening (50) in the vehicle component,
**characterised in that** the sealing element (54) comprises a substantially pot-shaped part, and the first sealing zone (62) and the at least one second sealing zone (72,74) are formed in the vicinity of the base wall (56), and **in that** in the vicinity of a peripheral wall (58) the sealing element (54) is formed like a bellows at least in zones between its third sealing zone (84) and its first sealing zone (62).

2. A vehicle temperature control system according to Claim 1, **characterised in that** the sealing element (54) is pressed with its first sealing zone (62) against a surface (60) of the housing (12) surrounding at least one passage opening (36,38).

3. A vehicle temperature control system according to Claim 2, **characterised in that** a first pressing element (64) surrounding substantially entirely the at least one passage opening (36,38) is provided, and **in that** the sealing element (54) is clamped with its first sealing zone (62) between the surface (60) of the housing (12) and the first pressing element (64).

4. A vehicle temperature control system according to any one of Claims 1 to 3, **characterised in that** the sealing element (54) is pressed with its at least one second sealing zone (72,74) against an outer peripheral surface of the at least one duct (40,42).

5. A vehicle temperature control system according to Claim 4, **characterised in that** the at least one second sealing zone (72,74) has an opening (76,78), the opening dimension of which is smaller than the cross-sectional dimension of the at least one duct (40,42).

6. A vehicle temperature control system according to any one of Claims 1 to 5, **characterised in that** the third sealing zone (84) is designed to be clamped between the vehicle component (34) and a second pressing element (88).

7. A vehicle temperature control system according to Claim 6, **characterised in that** the sealing element (54) with its third sealing zone (84) and the second pressing element (88) are so formed that they can substantially entirely surround an opening (50) provided in the vehicle part (34).

8. A vehicle temperature control system according to any one of Claims 1 to 7, **characterised in that** the sealing element (54) is made from rubber-like material.

9. A vehicle temperature control system according to any one of Claims 1 to 8, **characterised in that** the passage opening (36,38) is traversed by a fuel-supply line (42) and/or a combustion air supply line (40) and/or an exhaust outlet line (44).

## Revendications

1. Système de variation de température pour véhicule, comprenant un boîtier (12) fixé ou à fixer sur un véhicule, un appareil de chauffage (18) fonctionnant avec un combustible qui comprend une zone formant brûleur (20) et une zone formant échangeur de chaleur (16) pour la transmission de la chaleur mise à disposition dans la zone formant brûleur (20) vers l'air qui traverse le boîtier (12), dans lequel il est prévu dans le boîtier (12) au moins une ouverture traversante (36, 38) pour au moins un conduit (40, 42, 44) qui mène à l'appareil de chauffage ou qui provient de celui-ci, comprenant en outre un élément d'étanchement (54) flexible qui referme de façon sensiblement étanche ladite au moins une ouverture traversante (36, 38), ledit élément d'étanchement (54) comprenant une première zone d'étanchéité (62) par laquelle il est en contact étanche avec le boîtier (12), et au moins une seconde zone d'étanchéité (72, 74) par laquelle il est en contact étanche avec ledit au moins un conduit (40, 42), ledit élément d'étanchement (54) comprenant en outre une troisième zone d'étanchéité (84) destinée à venir en contact étanche contre un composant (34) du véhicule et entourant totalement par sa troisième zone d'étanchéité (84) une ouverture (50) dans le composant du véhicule,
**caractérisé en ce que** l'élément d'étanchement (54) est une pièce conformée sensiblement à la manière d'un godet, et la première zone d'étanchéité (62) et ladite au moins une seconde zone d'étanchéité (72, 74) sont réalisées dans la région d'une paroi de fond (56), et **en ce que**, dans la région d'une paroi périphérique (58), l'élément d'étanchement (54) est réalisé au moins localement à la manière d'un soufflet entre sa troisième zone d'étanchéité (84) et sa première zone d'étanchéité (62).

2. Système de variation de température pour véhicule selon la revendication 1,
**caractérisé en ce que** l'élément d'étanchement (54) est pressé par sa première zone d'étanchéité (62) contre une surface (60) du boîtier (12), laquelle entoure au moins une ouverture traversante (36, 38).

3. Système de variation de température pour véhicule selon la revendication 2,
**caractérisé en ce qu'**il est prévu un premier élément de pressage (64) qui entoure sensiblement complètement ladite au moins une ouverture traversante (36, 38), et **en ce que** l'élément d'étanchement (54) est enserré par sa première zone d'étanchéité (62) entre la surface (60) du boîtier (12) et le premier élément de pressage (64).

4. Système de variation de température pour véhicule selon l'une des revendications 1 à 3,
**caractérisé en ce que** l'élément d'étanchement (54) est pressé par ladite au moins une seconde zone d'étanchéité (72, 74) contre une surface périphérique extérieure dudit au moins un conduit (40, 42).

5. Système de variation de température pour véhicule selon la revendication 4,
**caractérisé en ce que** ladite au moins une seconde zone d'étanchéité (72, 74) comporte une ouverture (76, 78) dont la dimension est plus petite que la dimension de la section transversale dudit au moins un conduit (40, 42).

6. Système de variation de température pour véhicule selon l'une des revendications 1 à 5,
**caractérisé en ce que** la troisième zone d'étanchéité (84) est réalisée pour être enserrée entre le composant (34) du véhicule et un second élément de pressage (88).

7. Système de variation de température pour véhicule selon la revendication 6,
**caractérisé en ce que** l'élément d'étanchement (54) avec sa troisième zone d'étanchéité (84) et le second élément de pressage (88) sont formés de telle manière qu'ils peuvent entourer sensiblement complètement une ouverture (50) ménagée dans le composant (34) du véhicule.

8. Système de variation de température pour véhicule selon l'une des revendications 1 à 7,
**caractérisé en ce que** l'élément d'étanchement (54) est réalisé en un matériau présentant l'élasticité du caoutchouc.

9. Système de variation de température pour véhicule selon l'une des revendications 1 à 8,
**caractérisé en ce que** l'ouverture traversante (36, 38) est traversée par un conduit d'amenée de combustible (42) et/ou par un conduit d'amenée d'air de combustion (40) et/ou un conduit d'évacuation de gaz brûlés (44).
